# EUROPEAN PATENT APPLICATION

(11) **EP 2 169 462 A2**
(43) Date of publication of application: **31.03.2010**
(21) Application number: 09171471.7
(22) Date of filing: 28.09.2009
(51) Int. Cl.: G03B 15/05, G01P 3/40

(54) **Shutter-based stroboscope**

(30) Priority: 21.05.2009 US 470031; 29.09.2008 US 100762 P
(71) Applicant: Mutonen, Salomo, San Gabriel CA 91775 (US)
(72) Inventor: Mutonen, Salomo, San Gabriel CA 91775 (US)
(74) Representative: Gulde Hengelhaupt Ziebig & Schneider

(57) **Abstract**

Traditional stroboscopes use either a perforated rotating disc or intermittent lighting to alternately occlude or highlight a particular scene at periodic intervals. The embodiments of the present invention are directed to a shutter-based approach, where an optic (such as eyeglasses, binoculars, or a magnifying glass) is equipped with a shutter (such as a liquid crystal display) to periodically occlude the vision of a user through use of a handheld controller to regulate the shutter speed.

## Description

### CROSS-REFERENCE TO RELATED APPLICATION(S)

This application claims priority to and the benefit of U.S. Provisional Application No. 61/100,762, entitled "Shutter-Based Stroboscope," filed September 29, 2008, the entire content of which is incorporated by reference herein.

### BACKGROUND OF THE INVENTION

A stroboscope is an instrument used to make a cyclically moving object of uniform speed appear to be slow moving or stationary. A basic stroboscope is made of a rotating disc with evenly spaced holes placed in the line of sight between the observer and the moving object. The rotating disc exposes the moving object for brief periods when a hole in the disc lines up with the observer's line of sight. The rotating speed of the disc adjusts so that it synchronizes or nearly synchronizes with the movement of the observed system by exposing the object at moments when the object is presenting itself in roughly the same orientation to the observer. Perfect synchronization makes the object appear to stop, while nearly perfect synchronization makes the object appear to move slowly (either forward or backward).

A conventional electronic stroboscope replaces the rotating disc with a lamp capable of emitting a rapid stream of short bright flashes in order to synchronize with the movement of the observed system. The bright flashes line up with the object presenting roughly the same orientation to the observer. The functioning of the conventional electronic stroboscope depends on the difference in contrast level between the unlit periods and the lit periods being sufficient for the observer to be able to disregard the unlit periods. Thus, the conventional electronic stroboscope performs best when the ambient light is minimal.

An electronic stroboscope has numerous limitations. For instance, in bright background light, a flash-based stroboscope cannot perform optimally because the bright backlight fades out the flash. In addition, a flash-based stroboscope has limited distance usage because flash intensity diminishes as distance increases. Finally, such devices are power hungry, bulky, and heavy. A big battery is necessary in order to power up the high power flash lamp.

### BRIEF SUMMARY OF THE INVENTION

In an exemplary embodiment according to the present invention, a shutter-based stroboscope is provided. The stroboscope includes: an optic configured for an observer to view through; a shutter configured to alternately expose and occlude the observer's view through the optic on a periodic basis using a period between exposures; and a controller configured to regulate the period of the shutter. In addition, the controller includes a user interface for controlling the period.

In another exemplary embodiment according to the present invention, a method of stroboscopic viewing by an observer through an optical device comprising a shutter is provided. The method includes the steps of: alternately exposing and occluding a view of the observer with the shutter on a periodic basis using a period between exposures; regulating the period using a controller, where the controller includes a user interface for controlling the shutter speed; and connecting the controller to the optical device.

### BRIEF DESCRIPTION OF THE DRAWINGS

The accompanying drawings illustrate embodiments of the present invention, and together with the description, serve to explain the principles of the embodiments of the present invention.

FIG. 1 shows a user wearing an exemplary shutter-based stroboscope while observing a rotating fan.

FIGS. 2A-2D show a series of shots of an exemplary optic equipped with a shutter viewing a fan with a rotating blade, where the shutter speed corresponds to the rotation of the blade.

FIGS. 3A-3C depict graphs contrasting the different brightness levels available with shutter-based and conventional stroboscopes.

FIG. 4 shows a first embodiment of a shutter-based stroboscope based on eyeglasses.

FIG. 5 depicts a second embodiment of a shutter-based stroboscope based on binoculars.

FIG. 6 shows a third embodiment of a shutter-based stroboscope based on a magnifying glass.

FIG. 7 shows a fourth embodiment of a shutter-based stroboscope, similar to FIG. 4, but with a wireless controller and independent shutter speed control and display for each lens.

FIG. 8 shows a block diagram of example handheld controller components and functions.

### DETAILED DESCRIPTION OF EMBODIMENTS

Now, exemplary embodiments of the present invention will be described in more detail with reference to the accompanying drawings.

A shutter-based stroboscope is provided according to one embodiment of the present invention. The shutter-based stroboscope typically uses natural background light (the brighter the light, the better the result). Most speed or vibration testing takes place during daytime or in well-lit indoor facilities. This is a suitable condition for a shutter-based stroboscope. The shutter-based stroboscope also saves energy (only a small low-power battery is typically required). In addition, the shutter-based stroboscope may use a pocketsize, handheld controller, which is lightweight and easy to carry around. In other embodiments, the size and mobility of the controller may vary. For example, the controller may be mounted in a big system chassis.

The shutter-based stroboscope functions as easily for long distance observations as it does for short distance observations. The shutter-based stroboscope is also great for outdoor use (it functions suitably in bright sunshine). Unlike the flash-based stroboscope, the shutter-based stroboscope generates no heat, and there is no intense light or flash. In addition, the shutter-based stroboscope is able to check the speed of multiple cyclically moving objects with the same rotations per minute (RPM) at one glance.

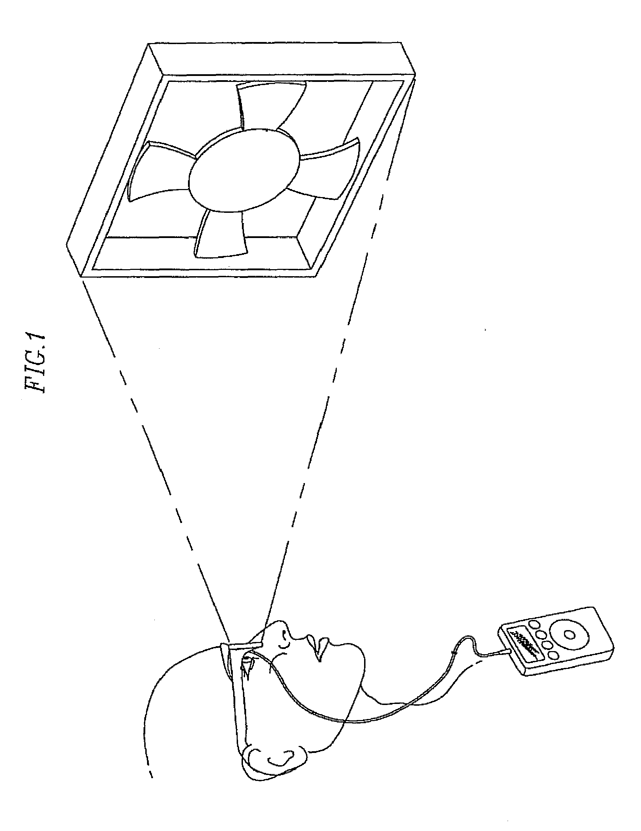

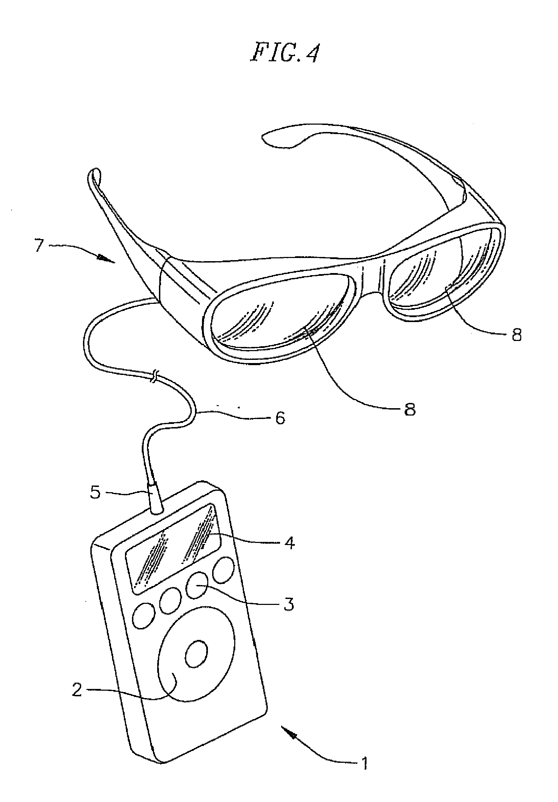

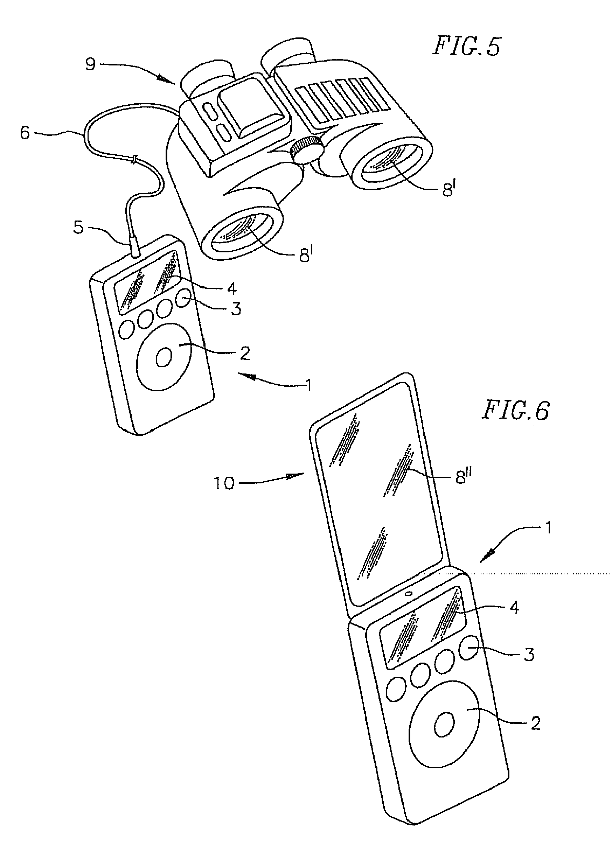

Shutter-based stroboscope systems (FIGS. 1 and 4-6) have a variety of applications. Shutter-based stroboscopes can be installed in many optical devices, including (but not limited to): eyeglasses (FIGS. 1 and 4), binoculars (FIG. 5, element 9), magnifying glasses (FIG. 6, element 10), microscopes, night vision devices, and safety glasses. In addition, there are many industrial applications of shutter-based stroboscopes, such as textile industries, printing and paper industries, optical industries, engines and turbines, automotive engineering, packaging, chemical industries, electronic engineering, mechanical engineering, film production, quality control, maintenance procedure, motion analysis, and vibration analysis.

A stroboscope works with a few basic parameters, including shutter speed and pulse width. "Shutter speed" refers to the frequency of shutter exposure. Borrowing terminology from the basic (rotating disc) stroboscope, the number of revolutions per minute (RPM) is the number of times in one minute that the shutter is exposed (i.e., that the disc rotates if the disc has a single hole). The shutter opens and closes at regular intervals, also known as periods. The period is the time between consecutive openings of the shutter, that is, the reciprocal of the shutter speed RPM. For instance, a basic stroboscope operating at a shutter speed 120 RPM is exposing holes to the viewer at the rate of 120 holes per minute, which translates to a period of a half a second per exposure. If the disc had only one hole, this would also translate to 120 revolutions per minute, or a half a second per revolution.

RPM is also useful to describe the rotational speed of the observed object. When shutter speed RPM equals the observed object's RPM, the movement of the object will appear to "stop." As discussed more below, however, the same is not necessarily true in reverse: when the movement of the object appears to be "stopped" by a stroboscope, the shutter speed RPM does not have to be the same as the object's RPM. In addition, observed objects with radial symmetry (e.g., a propeller or a spoked bicycle tire rotating about its hub) may appear to be rotating at a higher RPM since they might be visually indistinguishable at numerous points of the same rotation.

In contrast to the basic stroboscope, an electronic stroboscope emits bursts of light at the same corresponding frequency as the shutter speed RPM for a basic stroboscope, so it makes sense to refer to the speed of the electronic stroboscope by the same RPM term. Likewise, the period of an electronic stroboscope is the time between consecutive light emissions. An electronic stroboscope operating at a shutter speed of 600 RPM emits 600 bursts of light every minute, which is a period of a tenth of a second between consecutive bursts of light.

There can be multiple shutter speed RPMs that appear to "stop" the motion of the observed object. For instance, if the object is rotating at 600 RPM, then not only does a shutter speed of 600 RPM appear to stop the object's motion, but so does a shutter speed of 300 RPM (i.e., one-half of the object's RPM). This is because the object will still be at the same relative position when viewed with a shutter speed of 300 RPM as it would be at 600 RPM, only the object will have undergone two full rotations instead of one between periods. A similar phenomenon takes place with a shutter speed of 200 RPM (i.e., one-third of the object's RPM), only the object will have undergone three full rotations instead of one between periods. In fact, anytime the object's RPM is divided by an integer, it produces a shutter speed RPM that appears to stop the object (e.g., in the above example, other shutter speeds that work include 600/4 = 150 RPM, 600/5 = 120 RPM, etc.). Conversely, dividing an object's RPM by any number other than an integer (such as a fraction) results in a shutter speed RPM that does not appear to stop the motion (absent any radial symmetry).

While there can be multiple shutter speed RPMs that appear to stop the motion of the observed object, the largest such shutter speed (i.e., the shutter speed equal to the object's RPM) should be the easiest to fine tune. That is, the object should appear to slow down more gracefully as the shutter speed RPM approaches the object's RPM than when the shutter speed RPM approaches some smaller value that also appears to stop the motion (e.g., one-half or one-third of the object's RPM).

This definition of shutter speed is in contrast to a traditional film camera's definition, where shutter speed refers to the duration (expressed typically as a fraction of a second) of shutter exposure on the film. The camera shutter speed concept is captured in a stroboscope instead by the term "pulse width," which refers to the duration of shutter exposure, expressed either in absolute time (e.g., 1/250 of a second) or as a fraction or percentage of the shutter's period (e.g., 1/20 or 5%). For example, in a rotating disc stroboscope, a pulse width could be the fraction of the disc taken up by holes, while for an electronic stroboscope, the pulse width might be the flash duration.

In general, the smaller the pulse width, the more dramatic the effect of stopping the action of the observed scene. Smaller pulse widths do have drawbacks, though. For instance, in a basic stroboscope, the smaller the pulse width, the less light comes through the shutter. Steadily decreasing the pulse width eventually renders the image too dim to see. Similarly, in an electronic stroboscope, the smaller the pulse width, the less contrast between the ambient lighting and the stroboscope-lit scene. Steadily decreasing the pulse width eventually renders the contrast so small that the normal scene is indistinguishable from the stroboscope-lit scene.

Larger pulse widths, on the other hand, cause the scene movement to become more continuous, thus destroying the stop action effect. Consequently, a stroboscope can operate more effectively and in more environments if there is a way to control both shutter speed and pulse width. A shutter-based stroboscope can control both shutter speed and pulse width.

In a first embodiment of a shutter-based stroboscope, a pair of shutter glasses replaces the conventional lamp of a flash-based stroboscope. See FIG. 1 for an example shutter-based stroboscope worn by a user observing a fan with a rotating blade. The stroboscope in this embodiment is a pair of eyeglasses.

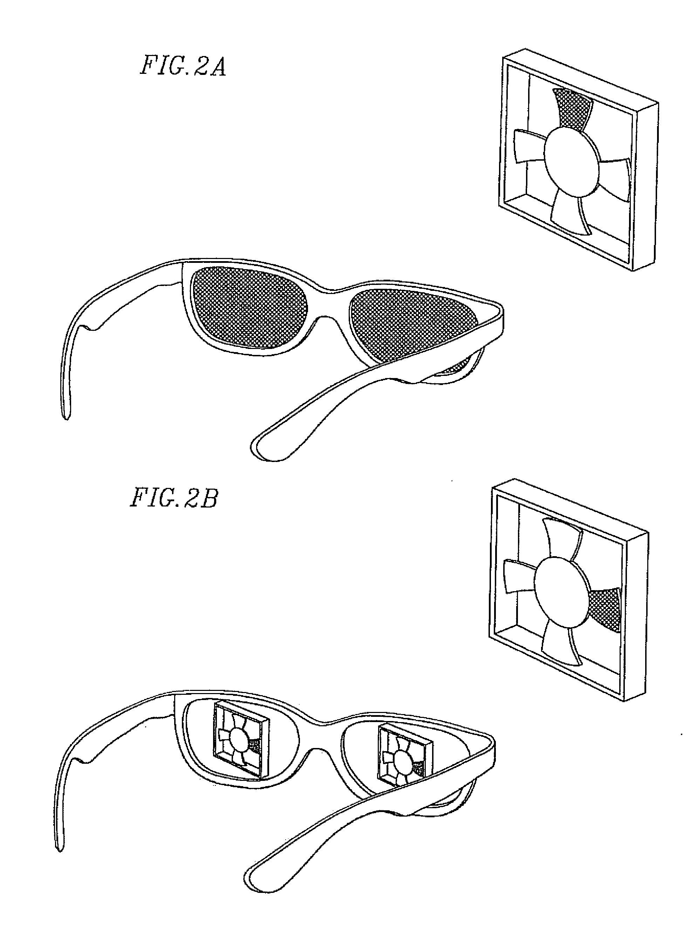

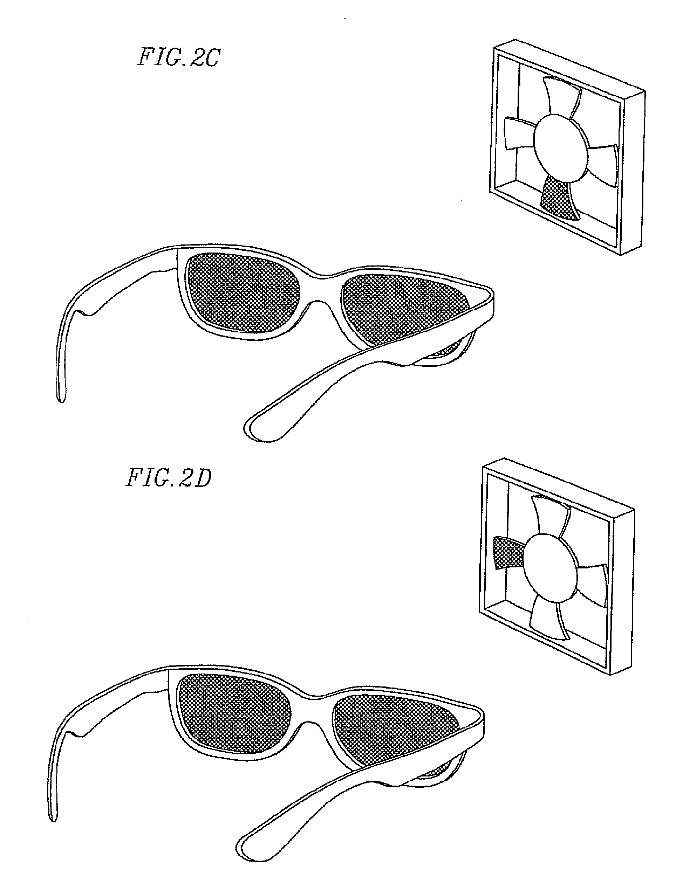

The electronically controlled liquid crystal display (LCD), magneto-optical, or electro-optical (shutter element 8 in FIGS. 4-6) shutter glasses regulate the natural background light by briefly exposing the object to the viewer between periods of completely blocking the object from view. For example, FIGS. 2A, 2C, and 2D show a period when the shutter glasses block the object fan from view while FIG. 2B shows a comparatively brief period when the glasses expose the fan to the viewer. Hence, cyclical movement of the observed system appears in sequential positions. As soon as the shutter speed-that is, the time between periods of opening the shutter-of the glasses synchronizes with the moving object's speed, the picture captured through the shutter glasses appears to be "stationary."

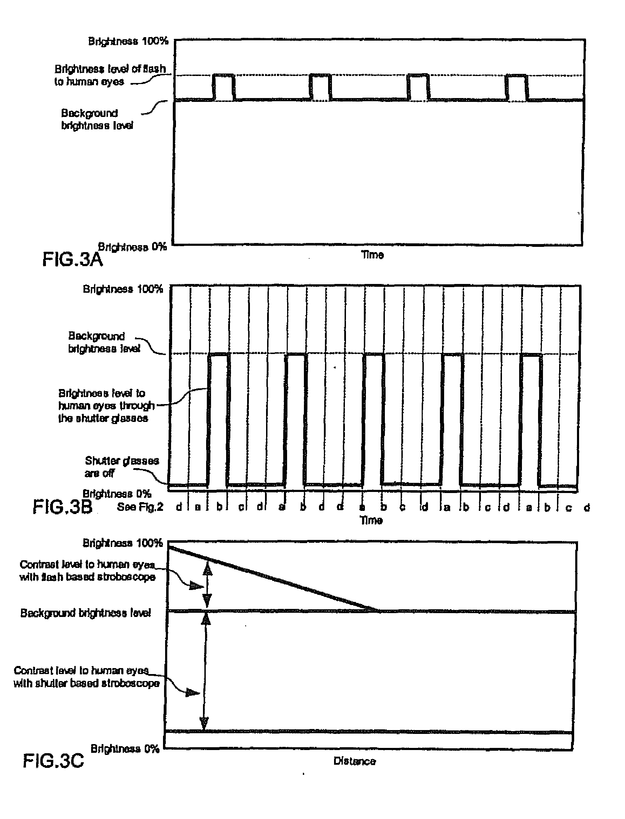

FIGS. 3A-3C demonstrates the differences between the conventional stroboscope and the shutter-based stroboscope. A conventional electronic stroboscope rapidly flashes its lamp periodically to increase the brightness of the rotating target so that human eyes can catch the "stop motion." This process not only captures the particular "stop motion," but also to a lesser extent allows observation of the target's whole rotation. Moreover, the flashes brighten the background light. As a result, the brighter the background light, the smaller the contrast between the brightness level generated by the flash lamp and the brightness level of the background light (refer to FIG. 3A). Therefore, it is harder for a flash lamp stroboscope operator to capture the "stop motion" under bright background light.

Unlike the conventional stroboscope using artificial-flash light, the shutter-based stroboscope ordinarily uses natural background light available to complete the same task (refer to FIG. 3B). In general, human eyes are more sensitive to brightness after experiencing a short period of darkness. A shutter-based stroboscope rapidly blocks out the natural background light and darkens all view at once (refer to FIGS. 2A, 2C, and 2D). The user does not observe anything at this stage. In the next stage, the shutter glasses briefly open up and expose the background light to the viewer. The enormous contrast from the previous darkness to the current brightness, which is the background light itself, makes our eyes catch "stop motion" easily (refer to FIG. 2B). After this stage, the shutter glasses darken all view again until the next synchronization period.

Shutter-based stroboscopes work effectively even from a long distance, as demonstrated in FIG. 3C. Long distance does not reduce the capability of the shutter glasses to capture "stop motion," since the contrast level between the brightness and darkness of the background light remains the same. However, the flash-lamp-based stroboscope reduces effectiveness of long distance usage. The longer the distance, the dimmer the flash, thus the smaller the contrast level and the harder it is to capture "stop motion."

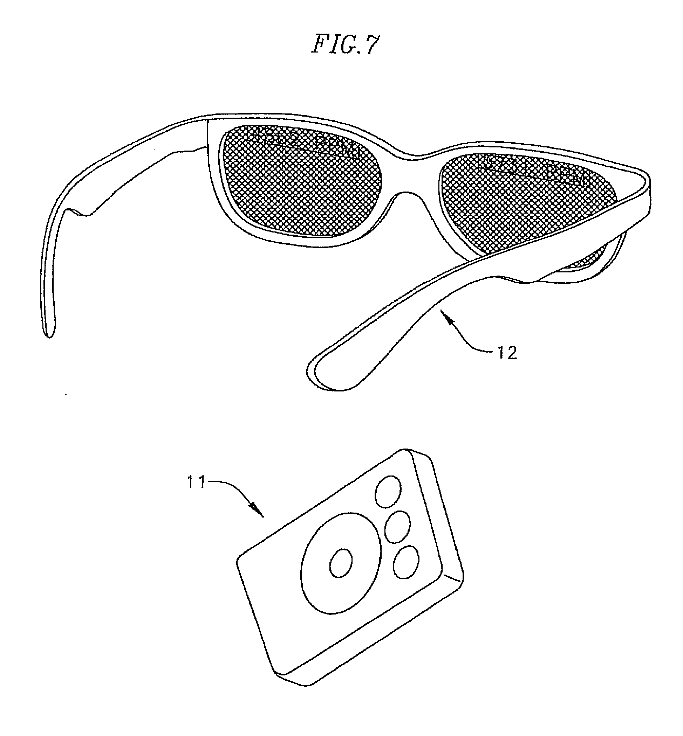

A shutter-based stroboscope according to one embodiment depicted in FIG. 4 includes a pair of shutter glasses 7 with two lenses, each of which has a shutter 8, a handheld pocket sized digital controller 1, and a cable 6 and a connector 5 to link the shutter glasses with the controller. In other embodiments, the link can be a wireless, for example, as shown in FIG. 7. By adjusting the disc jog 2 and selection buttons 3 on the digital controller 1, the shutter speed eventually synchronizes with the moving object's speed (for example, a fan as shown in FIG. 2B). The display window 4 displays this speed on the digital controller.

There are other possible embodiments. For instance, FIG. 5 shows a shutter stroboscope implemented as a pair of binoculars 9, for observing distant objects, with a shutter 8' for each lens. It should be noted that similar elements appear with similar numbers in the drawings and their descriptions appear only once. FIG. 6 depicts a shutter stroboscope magnifying lens 10, for observing close-up objects, which comes with a single shutter 8". FIG. 7 shows a pair of eyeglasses 12 connected to a wireless controller 11. This particular embodiment has an independently controllable shutter speed for each of the lenses. The shutter speed on each lens can be the same or different depending on the user's input on the control panel. In addition, the lens' corresponding shutter speed is displayable on an LCD display attached to each lens. Thus, the controller 11 no longer needs to have its own display even though it can have a display as well. In FIG. 7, the left lens has been set to a shutter speed of 4862 revolutions per minute (RPM) while the right lens has been set to 5731 RPM.

There are several uses for independently controllable shutters for each eye. For instance, if one eye is set to a shutter speed RPM setting that stops the action, the other one could cycle through various multiples (e.g., twice) of that RPM to see if a higher RPM setting that stops the action can be obtained. Another use is to detect if the observed object rotates within a required tolerance range without requiring the user to fine-tune the handheld controller to match the exact speed of the object. By setting one lens' shutter speed at the low end of the tolerance range, and another lens' shutter speed at the high end of the tolerance range, when the object is rotating within the range, the user should observe through the two lenses two images spinning in opposite directions. The user observes a different pattern if the object is rotating out of the range (e.g., both images rotating in the same direction). By observing the objects directly through the shutter glass lenses, the rotating images are instantly observed and compared, which saves time and effort for the user compared to other ways of observing the object's rotation.

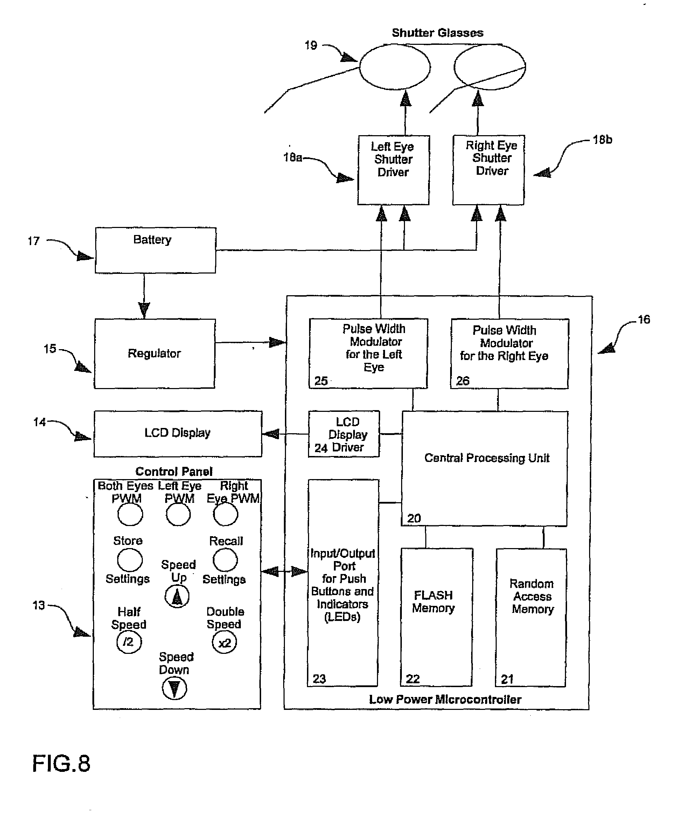

Finally, FIG. 8 shows an example control panel 13, a low power microcontroller 16, and other components of an exemplary handheld controller for a pair of two-lens shutter glasses 19 with independently controllable shutters for each lens. The microcontroller 16 controls most of the logic behind the various functions of the controller. The microcontroller 16 includes: a central processing unit 20 (for controlling most of the automated processing of the controller); a random access memory (RAM) 21 to store temporary data needed by the central processing unit (CPU) 20; flash memory 22 or read-only memory (ROM)-for example, erasable programmable read-only memory (EPROM) or electrically erasable programmable read-only memory (EEPROM)-to store more permanent data (like current settings and instruction code for the CPU 20); an input/output port 23 to input control signals (from buttons on the control panel 13) and output control signals, such as light emitting diode (LED) indicators on the control panel 13; an LCD display driver 24 to control the LCD display 14; a left eye pulse width modulator (PWM) 25 to control the left eye shutter driver 18a; and a right eye PWM 26 to control the right eye shutter driver 18b.

Based on the user's choice from the control panel 13, the microcontroller 16 sets parameters on PWMs 25 and 26. For instance, there is a PWM 25 for the left eye, which is responsible for controlling the shutter speed and pulse width (duration) of the left eye's shutter. The PWMs, in turn, generate control signals for the shutter drivers 18a and 18b. The shutter drivers 18a and 18b amplify the incoming signals to something suitable for the shutter glasses 19.

The basic operation of the controller and the buttons on the control panel 13 is as follows:
Step 1: Select which shutters to control. There are several buttons:
   "Both Eyes PWM" allows consistent and concurrent control of both shutters
   "Left Eye PWM" limits the controls so that only the left eye's shutter is controlled (the right eye's shutter is not affected)
   "Right Eye PWM" limits the controls so that only the right eye's shutter is controlled (the left eye's shutter is not affected)
Step 2: Adjust the shutter speed to synchronize with the observed object. It should be noted that the LCD display area 14 displays all speed figures. Here are the example buttons:
   "Speed Up" incrementally increases the shutter speed
   "Speed Down" incrementally decreases the shutter speed
   "Double Speed" doubles the shutter speed
   "Half Speed" halves the shutter speed
There are also buttons to save and retrieve previous shutter settings. The "Store Setting" button allows the user to save the existing settings in the flash memory 22 in the microcontroller 16 for future use while the "Recall Setting" button enables the user to retrieve any saved data from flash memory 22. There can be other buttons (not shown). For instance, a mode button can toggle between the other buttons controlling shutter speed and the other buttons controlling pulse width.

In addition, the handheld controller is battery operated and has a battery 17 to power the controller (through a regulator 15) as well as a shutter driver for the left eye 18a and a shutter driver for the right eye 18b (that is, independently controllable shutters, one for each eye). The controller also has an LCD display 14 to display such data as the shutter speed RPM and shutter pulse width for each eye.

Although the present invention has been described in considerable detail with reference to certain exemplary embodiments, other embodiments are possible. For example, it can be designed for use with microscopes, telescopes, sunglasses, goggles, welder's masks, etc. Therefore, the spirit and scope of the appended claims should not be limited to the description of the preferred embodiments contained herein.

## Claims

1. A stroboscope comprising:
an optic configured for an observer to view through;
a shutter configured to alternately expose and occlude the observer's view through the optic on a periodic basis using a period between exposures; and
a controller configured to regulate the period of the shutter, the controller comprising a user interface for controlling the period.

2. The stroboscope of claim 1, further comprising a connection device for linking the controller to the optic.

3. The stroboscope of claim 2, wherein the connection device comprises a wireless connection device.

4. The stroboscope of claim 1, wherein the optic comprises two lenses, wherein one of the two lenses is configured for viewing with a left eye of the observer and another of the two lenses is configured for viewing with a right eye of the observer.

5. The stroboscope of claim 4, wherein the optic comprises eyeglasses.

6. The stroboscope of claim 4, wherein the optic comprises binoculars.

7. The stroboscope of claim 4, wherein the controller is adapted to regulate the shutter in substantially a same manner and at substantially a same time for each of the two lenses.

8. The stroboscope of claim 4, wherein the controller is adapted to regulate the shutter independently for each of the two lenses.

9. The stroboscope of claim 1, wherein the optic is configured for the observer to view a live scene.

10. The stroboscope of claim 1, wherein the shutter is electronically controlled.

11. The stroboscope of claim 10, wherein the shutter comprises a liquid crystal display (LGD), magneto-optical, or electro-optical shutter.

12. The stroboscope of claim 1, wherein the optic comprises a magnifying glass.

13. The stroboscope of claim 1, wherein the controller is handheld and pocket sized.

14. The stroboscope of claim 1, wherein the user interface comprises a digital display configured to display the period.

15. The stroboscope of claim 14, wherein the digital display is proximal to the shutter.

16. The stroboscope of claim 1, wherein the controller further regulates a shutter pulse width.

17. The stroboscope of claim 16, wherein the controller regulates the shutter pulse width as a fraction or percentage of the period.

18. The stroboscope of claim 16, wherein the controller regulates the shutter pulse width as a fixed amount of time.

19. A method of stroboscopic viewing by an observer through an optical device comprising a shutter, the method comprising:
alternately exposing and occluding a view of the observer with the shutter on a periodic basis using a period between exposures;
regulating the period us ing a controller, the controller comprising a user interface for controlling the period; and
connecting the controller to the optical device.

20. The method of stroboscopic viewing of claim 19, wherein the optical device comprises two lenses, wherein one of the two lenses is configured for viewing with a left eye of the observer and another of the two lenses is configured for viewing with a right eye of the observer.

21. The method of stroboscopic viewing of claim 20, wherein each of the two lenses can be regulated independently.

22. The method of stroboscopic viewing of claim 19, further comprising regulating a shutter pulse width with the controller.
